# EUROPEAN PATENT APPLICATION

(11) **EP 1 241 153 A1**
(43) Date of publication of application: **18.09.2002**
(21) Application number: 00977911.7
(22) Date of filing: 24.11.2000
(51) Int. Cl.: C06D 5/06, B60R 21/26

(54) **GAS-GENERATING AGENT COMPOSITION**

(30) Priority: 26.11.1999 JP 33611899; 17.11.2000 JP 2000351199
(71) Applicant: Daicel Chemical Industries, Ltd., Osaka 590-8501 (JP)
(72) Inventor: YAMATO, Yo, Himeji-shi, Hyogo 671-1234 (JP)
(74) Representative: Grünecker, Kinkeldey, Stockmair & Schwanhäusser Anwaltssozietät
(86) International application number: JP0008290
(87) International publication number: WO01038266

(57) **Abstract**

A gas generating composition having an improved thermal stability of a fuel is obtained.

A gas generating composition comprising a gas generating agent containing a non-sodium azide compound fuel and an oxidizing agent, and an adsorbent. Since substances accelerating decomposition of a fuel, such as radicals and the like generated by decomposition of the fuel are adsorbed and kept on the adsorbent, further decomposition of the fuel is inhibited to increase the thermal stability.

## Description

### Technical Field to Which the Invention Belongs

This invention relates to a gas generating composition having an improved thermal stability of a gas generating agent which becomes an actuating gas in an air bag system installed in automobiles, airplanes and the like for protecting human bodies.

Further, this invention relates to a method of using the gas generating composition, a gas generator using the gas generating composition, and an inflator system using the gas generator.

### Prior Art

In the existing air bag system, a gas generator is housed in a steering wheel of a driver side or in a dashboard of a passenger side. Since an inside of a car has a considerably high temperature in midsummer, a gas generator is likewise exposed to a high temperature. Further, since a life of a car is considered to be approximately 10 to 15 years, a performance of the generator has to be secured at least within this term. In order to stabilize the performance of the air bag system under such conditions, it is important that the gas generating agent in the gas generator is not deteriorated. When the gas generating agent is deteriorated due to heat or the like, a burning behavior of the gas generating agent changes, and an inflating behavior of the air bag changes accordingly, impairing a reliability of the air bag system.

Generally, a thermal stability of a gas generating agent is closely related with a decomposition temperature. When a decomposition temperature is high, a thermal stability tends to be good. Since a sodium azide based gas generating agent is basically formed of an inorganic substance, it has a high decomposition temperature and a thermal stability. However, since a fuel of an organic material is commonly used in a non-sodium azide compound gas generating agent, a decomposition temperature is naturally decreased, and the thermal stability tends to be worse than that of the sodium azide based gas generating agent. Actually, the sodium azide based gas generating agent starts decomposition above approximately 400°C, whereas the non-sodium azide compound gas generating agent mostly has a decomposition starting temperature of not higher than 250°C. The evaluation of these thermal stabilities is determined depending on the type and the composition ratio of components contained in the gas generating agent. Thus, it is difficult to improve the thermal stability without changing the type and the composition ratio of the gas generating agent.

JP-A 8-12481 discloses that with respect to a method of preventing decomposition of a gas generating agent and improving a thermal stability, in order to prevent decomposition caused by contact between azodicarbonamide (ADCA) and CuO as an oxidizing agent, one or both thereof are subjected to surface coating treatment. However, with a composition of ADCA/KClO₄/CuO/starch shown therein, a combustion temperature is too high, so that a filter of a gas generator or an air bag is damaged with heat, or a particulate KCl mist generated by the gas generating agent after burning is released outside the gas generator in a large amount. Accordingly, it is hardly used directly as a gas generating agent for an air bag. In order to solve these problems, a method is considered in which a part of KClO₄ as an oxidizing agent is replaced with a nitrate such as KNO₃ or Sr(NO₃)₂. However, in such a modification, a satisfactory thermal stability cannot be provided by the method described in JP-A 8-12481. The reason is considered to be that since KNO₃ or Sr(NO₃)₂ is dissolved in water, starch as a surface coating agent is incorporated in KNO₃ or Sr(NO₃)₂, with the result that the surface of ADCA or CuO is not coated well.

### Disclosure of the Invention

Accordingly, it is an object of this invention to provide a gas generating composition in which a thermal stability of a gas generating agent containing a non-sodium azide compound fuel can be improved without changing a type and a composition ratio of a gas generating agent itself.

Another object of this invention is to provide a method of using the gas generating composition, a gas generator using the gas generating composition and an inflator system using the gas generator.

The present inventor has conducted investigations on a decomposition mechanism of ADCA and other gas generating agents. He has consequently found that the decomposition of ADCA occurs indeed due to contact with CuO, but not only that but also substances such as CONH₂ radical, NH₂ radical, CO and ammonia generated due to the decomposition of ADCA further accelerate the decomposition, and further that the thermal stability can markedly be improved by removing these decomposition-accelerating substances, and have completed this invention.

That is, this invention provides a gas generating composition characterized by comprising a gas generating agent containing at least one fuel selected from the group consisting of tetrazole derivatives and guanidine derivatives and a basic metal nitrate, and an adsorbent (hereinafter referred to as a "first invention").

Further, this invention provides a gas generating composition characterized by comprising a gas generating agent containing a non-sodium azide compound fuel and an oxidizing agent, and an adsorbent, the gas generating agent and the adsorbent being not integrally molded (hereinafter referred to as a "second invention").

Still further, this invention provides a gas generating composition characterized by comprising a gas generating agent containing a non-sodium azide compound fuel and an oxidizing agent and meeting at least one of the following requirements (a) to (c) (hereinafter referred to as a "third invention")
(a) a weight loss ratio of the gas generating agent when the gas generating composition is retained in a closed state at 110°C for 400 hours is 2% or less,
(b) regarding concentrations of trace gases contained in a gas generated by the combustion, as values measured in a 2, 800-liter tank, CO is 400 ppm or less, NO is 40 ppm or less, NO₂ is 8 ppm or less and NH₃ is 100 ppm or less, and
(c) a maximum internal pressure in a gas generator in the combustion of the gas generating agent is between 7,840 and 14,700 kPa.

Moreover, this invention provides a gas generator characterized by using the gas generating composition and an inflator system characterized by using the gas generator.

In this invention, as stated above, in the gas generating composition, substances accelerating the decomposition of a fuel, such as radicals, ammonia and the like generated by the decomposition of a fuel, are adsorbed and kept on the adsorbent. Accordingly, since further decomposition of the fuel is inhibited by such a function, the thermal stability of the gas generating agent can be improved. It is therefore possible to improve the reliability of the gas generator and the inflator system and to maintain a stable performance over a long period of time.

In addition, the gas generating composition of this invention can be used not only in a pyrotechnic single gas generator for a driver side as shown in Examples, but also in a wide variety of gas generators, for example, a gas generator for a passenger side, a dual output gas generator and a hybrid gas generator using a pressurized gas and a gas generating agent in combination.

### Brief Description of the Drawings

Fig. 1 is a schematic sectional view in a diameter direction of a gas generator used in a 60-liter tank combustion test.
Fig. 2 is a graph showing the results of a 60-liter tank combustion test.

### Description of Reference Numerals

- 100: gas generator
- 101: diffuser shell
- 102: closure shell
- 103: housing
- 104: igniter
- 105: transfer charge
- 106: coolant filter
- 107: gas discharge port
- 110: gas generating agent combustion chamber
- 115: gas generating agent
- 120: adsorbent

### Preferred Embodiment of the Invention

To begin with, the first invention is described. In the first invention, the gas generating agent contains at least one fuel selected from the group consisting of tetrazole derivatives and guanidine derivatives and a basic metal nitrate.

Tetrazole derivatives have a high content of a nitrogen atom in a molecule, and exhibit a low toxicity. When they are combined with a basic metal nitrate, a burning rate is increased. Thus, they are preferable. Examples thereof include monotetrazole compounds, bitetrazole compounds and the like. Specifically, at least one selected from the group consisting of tetrazole, 5-aminotetrazole, 5,5'-bi-1H-tetrazole, 5-nitroaminotetrazole, 5-aminotetrazole zinc salt, 5-aminotetrazole copper salt, bitetrazole, bitetrazole potassium salt (BHTK), bitetrazole sodium salt, bitetrazole magnesium salt, bitetrazole calcium salt, bitetrazole diammonium salt (BHTNH₃), bitetrazole copper salt and bitetrazole melamine salt is proposed.

Of these, bitetrazole diammonium salt is preferable because the content of the nitrogen atom is 81.4% by weight, LD₅₀ (oral-rat) is 2,000 mg/kg and a combustion efficiency is good. The bitetrazole compound here referred to includes a 5-5' binding compound and a 1-5' binding compound of two tetrazole rings. A 5-5' compound is preferable because it is economical and easily available.

As the guanidine derivatives, at least one selected from the group consisting of guanidine, mono-, di- and tri-aminoguanidine nitrates, guanidine nitrate, guanidine carbonate, nitroguanidine (NQ), dicyandiamide (DCDA) and nitroaminoguanidine nitrate is proposed. Of these, nitroguanidine and dicyandiamide are preferable.

The content of the fuel in the gas generating agent varies depending on the type of the oxidizing agent and the oxygen balance. It is preferably between 10 and 60% by weight, more preferably between 20 and 50% by weight.

The basic metal nitrate includes some compounds represented by the following formula. Further, some compounds contain hydrates thereof, too. In the formula, M represents a metal, x' represents the number of metals, y and y' each represent the number of NO₃ ions, z' represents the number of OH ions, and n represents a ratio of an M(OH)_{z} moiety to an M(NO₃)_{y} moiety.

M(NO₃)_{y}^{·}nM(OH)_{z} or M_{x'}(NO₃)_{y'}(OH)_{z'}

Examples of the compounds corresponding to the above-described formula include those containing, as a metal M, copper, cobalt, zinc, manganese, iron, molybdenum, bismuth and cerium, such as Cu₂(NO₃)(OH)₃, Cu₃(NO₃)(OH)₅^{·}2H₂O, Co₂(NO₃)(OH)₃, Zn₂(NO₃)(OH)₃, Mn(NO₃)(OH)₂, Fe₄(NO₃)(OH)₁₁^{·}2H₂O, Bi(NO₃)(OH)₂ and Ce(NO₃)₃(OH)^{·}3H₂O.

As the basic metal nitrate, at least one selected from the group consisting of a basic copper nitrate (BCN), a basic cobalt nitrate, a basic zinc nitrate, a basic manganese nitrate, a basic iron nitrate, a basic molybdenum nitrate, a basic bismuth nitrate and a basic cerium nitrate is proposed. Of these, a basic copper nitrate is preferable.

The basic copper nitrate has, in comparison with ammonium nitrate as an oxidizing agent, an excellent thermal stability because no phase transition occurs in the range of the use temperature and a melting point is high. Further, since the basic copper nitrate acts to decrease a combustion temperature of a gas generating agent, amounts of nitrogen oxides generated can be decreased.

The content of the basic copper nitrate in the gas generating agent is preferably between 40 and 90% by weight, more preferably between 50 and 80% by weight.

In the first invention, additives such as a binder and the like can further be incorporated. The additives such as the binder and the like are not particularly limited. At least one selected from the group consisting of carboxymethyl cellulose (CMC), carboxymethyl cellulose sodium salt (CMCNa), carboxymethyl cellulose potassium salt, carboxymethyl cellulose ammonium salt, cellulose acetate, cellulose acetate butyrate (CAB), methyl cellulose (MC), ethyl cellulose (EC), hydroxyethyl cellulose (HEC), ethyl hydroxyethyl cellulose (EHEC), hydroxypropyl cellulose (HPC), carboxymethylethyl cellulose (CMEC), microcrystalline cellulose, polyacrylamide, aminated polyacrylamide, polyacrylhydrazide, acrylamide'acrylic acid metal salt copolymer, copolymer of polyacrylamide and polyacrylate ester compound, polyvinyl alcohol, acrylic rubber, guar gum, starch, silicone, molybdenum disulfide, Japanese acid clay, talc, bentonite, diatomaceousearth, kaolin, calcium stearate, silica, alumina, sodium silicate, silicon nitride, silicon carbide, hydrotalcite, mica, a metal oxide, a metal hydroxide, a metal carbonate, a basic metal carbonate and a molybdate is proposed.

As the metal hydroxide, at least one selected from the group consisting of cobalt hydroxide and aluminum hydroxide is proposed. As the metal carbonate and the basic metal carbonate, at least one selected from the group consisting of calcium carbonate, cobalt carbonate, a basic zinc carbonate, a basic copper carbonate, a basic cobalt carbonate, a basic iron carbonate, a basic bismuth carbonate and a basic magnesium carbonate is proposed. As the molybdate, at least one selected from the group consisting of cobalt molybdate and ammonium molybdate is proposed.

The content of the additives such as the binder and the like in the gas generating agent is preferably between 0.1 and 15% by weight, more preferably between 0.5 and 12% by weight.

The adsorbent to be incorporated along with the gas generating agent in the first invention is for adsorbing and keeping the decomposition products generated by decomposition of the fuel component and the like of the gas generating agent, namely, gaseous components such as CONH₂ radical, NH₂ radical, CO, ammonia and the like which accelerate decomposition of the fuel component and the like of the gas generating agent, and liquid components. In order that the adsorbent exhibits a higher adsorption effect, it is advisable to dry the same satisfactorily. As this adsorbent, at least one selected from the group consisting of a synthetic zeolite (molecular sieve), a natural zeolite, activated alumina, silica gel, activated carbon, clay (for example, Japanese acid clay, bentonite, diatomaceous earth, kaolin and talc), solid superacids such as zirconia sulfate and the like, and solid acids such as solid phosphoric acid, silica-alumina, silica-magnesia and the like can be proposed. Of these, a synthetic zeolite is preferable.

Since the synthetic zeolite allows adsorption in a larger amount than other adsorbents at a low partial pressure, it acts effectively even in a non-pressurized gas generator. Since adsorption can be conducted in a large amount even at a high temperature, the synthetic zeolite can exhibit the effect satisfactorily although it is exposed to a high temperature as in a gas generator for an air bag. Further, since the synthetic zeolite preferentially adsorbs polar substances, it can effectively remove the most undesirable substance having an activity of accelerating decomposition, such as ammonia, and is also excellent in mechanical strengths and a thermal stability.

Examples of the synthetic zeolite include a 3A type having a pore diameter of approximately 3 Å (for example, Zeolam A-3, a trade name for a synthetic zeolite adsorbent supplied by Tosoh Corporation; spherical with a size of 8 to 10 mesh), a 4A type having a pore diameter of approximately 4 Å (for example, Zeolam A-4, a trade name for a synthetic zeolite adsorbent supplied by Tosoh Corporation; spherical with a size of 8 to 10 mesh), a 5A type having a pore diameter of approximately 5 Å (for example, Zeolam A-5, a trade name for a synthetic zeolite adsorbent supplied by Tosoh Corporation; spherical with a size of 8 to 10 mesh), a 13X type having a pore diameter of approximately 10 Å (for example, Zeolam F-9, a trade name for a synthetic zeolite adsorbent supplied by Tosoh Corporation; spherical with a size of 8 to 10 mesh) and the like. In the synthetic zeolite, a substance which can be adsorbed varies with the pore diameter (for example, the 3A type adsorbs water, ammonia and the like, the 4A type adsorbs water, ammonia, carbon dioxide, carbon monoxide, methanol, ethanol and the like, and the 5A type and the 13X type adsorb substances having a higher molecular weight) . Accordingly, what type of the synthetic zeolite is used may appropriately be selected from those having an ability to remove substances required to be removed.

With respect to the contents of the gas generating agent and the adsorbent in the gas generating composition of the first invention, the gas generating agent is preferably between 60 and 99.5% by weight, more preferably between 60 and 98% by weight, further preferably between 70 and 96% by weight. The adsorbent is preferably between 0.5 and 40% by weight, more preferably between 2 and 40% by weight, further preferably between 4 and 30% by weight.

The gas generating composition of the first invention can be formed by, for example, producing a gas generating agent by a dry method in which a fuel, an oxidizing agent and the like are mixed in powdery state or by a wet method in which these are mixed in the presence of water, an organic solvent or the like, further mixing the same with an adsorbent and integrally molding the mixture. However, a preferred embodiment in the first invention is that the gas generating agent and the adsorbent are separately molded into pellets, beads, a mesh, a powder, a disc or the like and mixed. Incidentally, when the gas generating agent and the adsorbent are integrally molded, an adverse effect is sometimes exerted on a combustibility of the gas generating agent and the like, and this embodiment is therefore not necessarily preferable. However, the first invention does not exclude such an integral molding of the composition.

Further, in another embodiment, the gas generating composition of the first invention can be adapted such that the gas generating agent and the adsorbent are kept so as not to be contacted. In this case, "so as not to be contacted" refers to a state in which the gas generating agent and the adsorbent are not contacted, for example, the gas generating agent and the adsorbent are separately packaged or both components are partitioned in one package or in one combustion chamber such that the two components are not mixed.

Moreover, in the gas generating composition of the first invention, it is advisable that when the gas generating composition (containing 40 g of the gas generating agent) is in a closed state, specifically, put in a stainless steel container having an inner capacity of 118.8 ml and retained in the closed state at 110° C for 400 hours, the weight loss ratio of the gas generating agent is 2% or less, preferably 1% or less, more preferably 0.7% or less.

Next, the second invention is described. In the second invention, the gas generating agent comprises the gas generating agent containing the non-sodium azide compound fuel and the oxidizing agent, and the adsorbent.

The non-sodium azide compound fuel is not particularly limited, and a nitrogen-containing compound which is often used generally as a fuel for a gas generating agent is available. Examples of such a nitrogen-containing compound include tetrazole derivatives and guanidine derivatives which are the same as in the first invention, and amide compounds such as azodicarbonamide and the like, oxamide, ammonium oxalate, hydrazodicarbonamide and the like.

The content of the fuel in the gas generating agent varies depending on the type of the oxidizing agent and the oxygen balance. It is preferably between 10 and 60% by weight, more preferably between 20 and 50% by weight.

The oxidizing agent is not particularly limited, and at least one selected from the group consisting of an oxyacid salt, a metal oxide, a metal double oxide and a basic metal nitrate which is the same as in the first invention is proposed.

The oxyacid salt can include one comprising a cation selected from ammonium, an alkali metal and an alkaline earth metal and a hydrogen-free anion selected from nitric acid, nitrous acid, chloric acid and perchloric acid. Examples of such an oxyacid salt include ammonium salts, alkali metal salts and alkaline earth metal salts of nitric acid such as ammonium nitrate, sodium nitrate, potassium nitrate, magnesium nitrate, strontium nitrate and the like; ammonium salts, alkali metal salts and alkaline earth metal salts of nitrous acid such as ammonium nitrite, sodium nitrite, potassium nitrite, magnesium nitrite, strontium nitrite and the like; ammonium salts, alkali metal salts and alkaline earth metal salts of chloric acid such as ammonium chlorate, sodium chlorate, potassium chlorate, magnesium chlorate, barium chlorate and the like; ammonium salts, alkali metal salts and alkaline earth. metal salts of perchloric acid such as ammonium perchlorate, sodium perchlorate, potassium perchlorate, magnesium perchlorate, barium perchlorate and the like; basic metal nitrates; and so forth.

The metal oxide and the metal double oxide include oxides and double oxides of copper, cobalt, iron, manganese, nickel, zinc, molybdenum and bismuth. Examples of the metal oxide and the metal double oxide include CuO, Cu₂O, Co₂O₃, CoO, Co₃O₄, Fe₂O₃, FeO, Fe₃O₄, MnO₂, Mn₂O₃, Mn₃O₄, NiO, ZnO, MoO₃, CoMoO₄, Bi₂MoO₆ and Bi₂O₃.

The content of the oxidizing agent in the gas generating agent is preferably between 40 and 90% by weight, more preferably between 50 and 80% by weight.

In the gas generating agent of the second invention, additives such as a binder and the like which are the same as in the first invention can be incorporated at the same ratios. By the way, the gas generating agent of the second invention does not contain at least one fuel selected from the tetrazole derivatives and the guanidine derivatives and the oxidizing agent selected from the basic metal nitrates at the same time. Accordingly, when at least one fuel selected from the tetrazole derivatives and the guanidine derivatives is used, the basic metal nitrates are not used as the oxidizing agent. When the basic metal nitrates are used as the oxidizing agent, the tetrazole derivatives and the guanidine derivatives are not used as the fuel.

As the adsorbent to be incorporated along with the gas generating agent in the second invention, the same adsorbent as in the first invention can be used. However, in the gas generating composition of the second invention, the gas generating agent and the adsorbent are not integrally molded. Therefore, the gas generating composition of the second invention can be obtained by, for example, separately molding the gas generating agent and the adsorbent into pellets, beads, a mesh, a powder, a disc or the like and mixing them.

Further, the gas generating composition of the second invention, like the gas generating agent of the first invention, can be adapted such that the gas generating agent and the adsorbent are kept so as not to be contacted.

Moreover, in the gas generating composition of the second invention, it is advisable that when the gas generating composition (containing 40 g of the gas generating agent) is in a closed state, specifically, put in a stainless steel container having an inner capacity of 118.8 ml and retained in the closed state at 110 C for 400 hours, the weight loss ratio of the gas generating agent is 2% or less, preferably 1% or less, more preferably 0.7% or less.

Next, the third invention is described. The gas generating composition of the third invention comprises the gas generating agent containing the non-sodium azide compound fuel and the oxidizing agent. In the third invention, the non-sodium azide compound fuel, the oxidizing agent and the additives such as a binder and the like which are the same as in the second invention can be used at the same ratios. It is also possible to use at least one fuel selected from the tetrazole derivatives and the guanidine derivatives and an oxidizing agent selected from the basic metal nitrates in combination.

The gas generating agent of the third invention meets at least one of requirements (a) to (c), preferably two of requirements (a) to (c), more preferably all of three requirements (a) to (c).

Requirement (a) is that a weight loss ratio of the gas generating agent when the gas generating composition is retained in a closed state at 110°C for 400 hours is 2% or less. Specifically, when the gas generating composition is put in a stainless steel container having an inner capacity of 118.8 ml and retained in the closed state at 110 C for 400 hours, the weight loss ratio of the gas generating agent is 2% or less, preferably 1% or less, more preferably 0.7% or less.

Requirement (b) is that regarding concentrations of trace gases contained in a gas generated by the combustion of the gas generating agent, as values measured in a 2,800-liter tank, CO is 400 ppm or less, NO is 40 ppm or less, NO₂ is 8 ppm or less and NH₃ is 100 ppm or less. Alternatively, they are approximately 30%, preferably 30% or less, more preferably 20% or less, further preferably 10% (CO = 120 ppm, NO = 10 ppm, NO₂ = 2 ppm and NH₃ = 30 ppm) or less of IDLH values shown by NIOSH such that CO is 1, 200 ppm or less, NO is 100 ppm or less, NO₂ is 20 ppm or less and NH₃ is 300 ppm or less.

Incidentally, these gas concentrations are, for example, values when a 2,800-liter tank test is conducted under conditions of 20°C and an output of 130 to 200 kPa using a standard single-type pyrotechnic inflator for a driver side. This gas generating composition can be used in another type of a gas generator regardless of the measuring conditions.

Requirement (c) is that a maximum internal pressure in a gas generator in the combustion of the gas generating agent is between 7,840 and 17,640 kPa, preferably between 8,820 and 14,700 kPa.

The gas generating composition of the third invention can increase a thermal stability when an adsorbent is further incorporated in the gas generating agent containing the fuel, the oxidizing agent and the like, and combustion characteristics such as a combustion temperature, a burning rate, a tank pressure, a combustion internal pressure, an amount of a generated gas, amounts of toxic gases in a generated gas, a weight loss ratio and the like can also be maintained after storage for a long period of time. It is thus preferable in meeting the foregoing requirements (a) to (c). As the adsorbent, those in the first and second inventions are available.

With respect to the contents of the gas generating agent and the adsorbent, the gas generating agent is preferably between 60 and 99.5% by weight, more preferably between 60 and 98% by weight, further preferably between 70 and 96% by weight, and the adsorbent is preferably between 0.5 and 40% by weight, more preferably between 2 and 40% by weight, further preferably between 4 and 30% by weight.

The gas generating composition of the third invention can be formed by, for example, producing a gas generating agent by a dry method in which a fuel, an oxidizing agent and the like are mixed in powdery state or by a wet method in which these are mixed in the presence of water, an organic solvent or the like, further mixing the same with an adsorbent and integrally molding the mixture. A preferred embodiment is that the gas generating agent and the adsorbent are separately molded into pellets, beads, a mesh, a powder, a disc or the like and mixed. Incidentally, when the gas generating agent and the adsorbent are integrally molded, an adverse effect is sometimes exerted on a combustibility of the gas generating agent and the like, and this embodiment is therefore not necessarily preferable. However, the third invention does not exclude such an integral molding of the composition.

The gas generating composition of the first to third inventions is placed in a combustion chamber for generating a gas in order to exhibit an inherent function of gas generation. However, in a continuous space system within a gas generator, the gas generating agent and the adsorbent can be placed separately in a spaced-apart state. The "in a continuous space system" here referred to means a state in which the adsorbent can adsorb and keep substances that accelerate decomposition of a fuel, such as CONH₂ radical, NH₂ radical, CO and ammonia generated by the decomposition of the gas generating agent. Accordingly, it includes naturally one and the same space and a case in which two spaces defined separately are linked through communication holes capable of passing a gas.

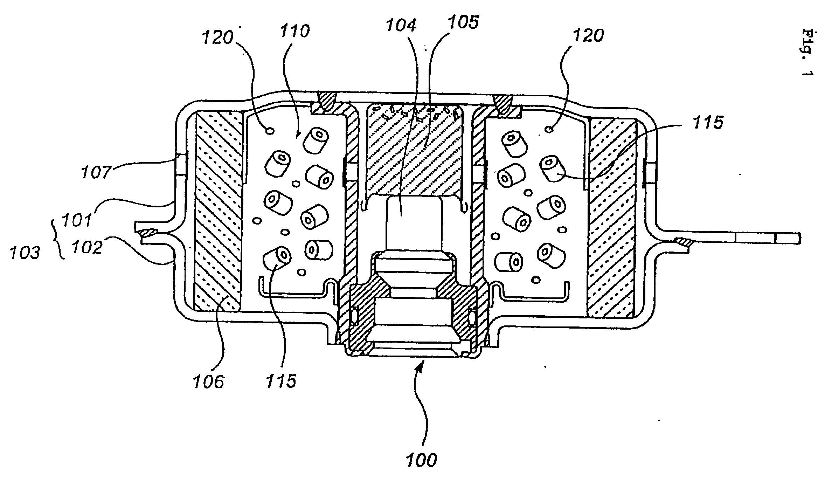

The gas generator of this invention uses the foregoing gas generating compositions of the first to third inventions. The structure and the type of the gas generator itself are not particularly limited. For example, an electric ignition-type gas generator for an air bag having a structure shown in Fig. 1 is proposed.

In a gas generator 100, a gas generating composition comprising a gas generating agent 115 and an adsorbent 120 is placed within a gas generating agent combustion chamber 110. At this time, as described in the foregoing using method, the gas generating agent 115 and the adsorbent 120 may be placed anywhere in the continuous space system. As a preferable mode, they are not integrally molded, that is, they are placed as separate molded articles. 103 is a housing (101 a diffuser shell, and 102 a closer shell), 104 an igniter, 105 a transfer charge, 106 a coolant/filter, and 107 a gas discharge port.

When the gas generating composition is thus put in a desired site within the gas generator, substances that accelerate decomposition of the fuel component and the like of the gas generating agent, such as CONH₂ radical, NH₂ radical, CO and ammonia generated by the decomposition of the fuel component and the like of the gas generating agent are adsorbed and kept on the adsorbent. Consequently, further acceleration of the decomposition of the fuel component and the like of the gas generating agent by the decomposition-accelerating substances is inhibited. As a result of inhibiting the decomposition of the fuel component and the like of the gas generating agent in this manner, the thermal stability of the gas generating agent is improved.

The inflator system of this invention has a module case in which the gas generator and the air bag are accommodated, a judging circuit (in case of an electric ignition-type gas generator), a sensor and the like, and it is installed in automobiles, airplanes and the like.

### EXAMPLES

This invention is specifically described by referring to the following Examples and Comparative Examples. However, this invention is not limited to these Examples only. In the following description, "parts" indicated "parts by weight", and "%" indicated "% by weight". Incidentally, the test methods are as described below.

### (1) Thermal stability test (weight loss ratio)

A gas generating composition (containing 40 g of a gas generating agent) was charged into an aluminum container to measure a total weight. (Total weight - weight of an aluminum container) was defined as a weight of a sample before the test. The aluminum container filled with the sample was placed in an SUS thick container (inner capacity 118.8 ml), and covered. At this time, the container was rendered in a closed state using a rubber packing and a clamp. This was put in a thermostat bath of 110°C. After the lapse of a predetermined period of time, the container was withdrawn from the thermostat bath. When the container was returned to room temperature, the container was opened, and the aluminum container was withdrawn therefrom. The total weight of the sample inclusive of the aluminum container was measured, and (total weight - weight of an aluminum container) was defined as a weight of the sample after the test. And, the change in weight was measured by comparing the weight before the test with that after the test to find a weight loss ratio, whereby a thermal stability was evaluated. The weight loss ratio was obtained from [(weight of a gas generating agent before test - weight of a gas generating agent after test)/weight of a gas generating agent before test] x 100.

### (2) Measurement of a gas concentration

The closed container after the completion of the thermal stability test was put into a polyvinyl chloride bag filled with approximately 2 liters of air, and the bag was sealed. A clamp was unfastened in the bag to open the closed container, and the gas in the container was released into the bag. The gas in the bag was diffused, and rendered uniform. Then, a detecting tube was pierced into the bag, and the gas concentration was quickly measured.

### Production Example 1

44.9 parts of nitroguanidine (NQ), 52.1 parts of a basic copper nitrate (BCN) and 3 parts of carboxymethyl cellulose sodium salt(CMC-Na) were charged into a kneader heated at approximately 70°C, and preliminarily mixed for 10 minutes. Further, 60 parts of deionized water were added, and these were kneaded for approximately 1 hour. Subsequently, in order to adjust the water content of the kneaded mixture, the kneader was opened, and the kneading was continued while evaporating water. When an appropriate hardness was provided, the adjustment of the water content was completed. And, the kneader was closed, and cooled until the temperature of the kneaded mixture reached 40°C. The kneaded mixture was then charged into an extruder, and extruded through a mold having an outer diameter of 2.4 mm and an inner diameter of 0.7 mm under a pressing condition at a pressure of 5,880 kPa to form a single-perforated cylindrical string. Further, this string was cut to a length of 2 mm with a cutter, and water was dried well to obtain a gas generating agent.

### Production Example 2

44.2 parts of nitroguanidine (NQ), 52.8 parts of a basic copper nitrate (BCN) and 3 parts of guar gum were charged into a kneader heated at approximately 70°C, and preliminarily mixed for 10 minutes. Further, 60 parts of deionized water were added, and these were kneaded for approximately 1 hour. Subsequently, in order to adjust the water content of the kneaded mixture, the kneader was opened, and the kneading was continued while evaporating water. When an appropriate hardness was provided, the adjustment of the water content was completed. And, the kneader was closed, and cooled until the temperature of the kneaded mixture reached 40°C. The kneaded mixture was then charged into an extruder, and extruded through a mold having an outer diameter of 2.4 mm and an inner diameter of 0.7 mm under a pressing condition at a pressure of 5,880 kPa to form a single-perforated cylindrical string. Further, this string was cut to a length of 2 mm with a cutter, and water was dried well to obtain a gas generating agent.

### Comparative Examples 1 to 4

The thermal stability test was conducted at 110°C using 40 g of the extruded pellet of the gas generating agent in Production Example 1. The results of measuring the gas concentration after the completion of the thermal stability test are shown in Table 1.

**Table 1**

| | Left-standing time (hrs) | Gas concentration (ppm) | | | | |
|---|---|---|---|---|---|---|
| | | NO | NO₂ | NH₃ | CO | CO₂ |
| Comparative Example 1 | 100 | 0 | 0 | >30 | 90 | >8000 |
| Comparative Example 2 | 200 | 0 | 0 | >30 | 0 | >8000 |
| Comparative Example 3 | 300 | 0 | 0 | >30 | 0 | >8000 |
| Comparative Example 4 | 400 | 0 | 0 | >30 | 0 | >8000 |

From the test results, it was found that large amounts of NH₃ and CO₂ and sometimes CO were generated by the decomposition of the gas generating agent.

### Comparative Example 5

After the gas concentration was measured in Comparative Examples 1 to 4, the weight loss ratio of the gas generating agent withdrawn from the closed container was examined. Consequently, the weight loss ratio of the gas generating agent after 100 hours was 0.58%, the weight loss ratio of the gas generating agent after 200 hours was 21.43%, the weight loss ratio of the gas generating agent after 300 hours was 21.99%, and the weight loss ratio of the gas generating agent after 400 hours was 22.82%. It was identified that the weight loss was drastic and the gas generating agent was hardly used directly as a gas generating agent for an air bag.

### Examples 1 to 4

The thermal stability test was conducted at 110°C using a gas generating composition (not integrally molded) comprising 40 g of the extruded pellet of the gas generating agent in Production Example 1 and 5 g of a spherical product of a synthetic zeolite 13X type (pore diameter approximately 10 Å). The synthetic zeolite was placed in a gap between an SUS thick container and an aluminum container filled with the gas generating agent, and was not contacted with the gas generating agent. The results of measuring the gas concentration after the completion of the thermal stability test are shown in Table 2.

**Table 2**

| | Left-standing time (hrs) | Gas concentration (ppm) | | | | |
|---|---|---|---|---|---|---|
| | | NO | NO₂ | NH₃ | CO | CO₂ |
| Example 1 | 100 | 0 | 0 | 0 | <25 | 500 |
| Example 2 | 200 | 0 | 0 | 0 | <25 | 600 |
| Example 3 | 300 | 0 | 0 | 0 | <25 | 600 |
| Example 4 | 400 | 0 | 0 | 0 | <25 | 500 |
| Note) A value (blank value) of CO₂ in a laboratory was between 500 and 600 ppm. | | | | | | |

From the test results, it was identified that only a small amount of CO was present in the closed container and NH₃ and CO₂ could completely be removed by the incorporation of the synthetic zeolite.

### Example 5

After the gas concentration was measured in Examples 1 to 4, the weight loss ratio of the gas generating agent withdrawn from the closed container was examined. As a result, the weight loss ratio of the gas generating agent after 100 hours was 0.23%, the weight loss ratio of the gas generating agent after 200 hours was 0.26%, the weight loss ratio of the gas generating agent after 300 hours was 0.31%, and the weight loss ratio of the gas generating agent after 400 hours was 0.33%. It was found that in comparison with Comparative Example 5, the weight loss ratio was markedly decreased and the incorporation of the synthetic zeolite was greatly effective for improving the thermal stability. Although it was exposed to a high temperature of 110°C for a long period of time, the high thermal stability was exhibited. It was identified that when the gas generating composition of this invention was applied to a gas generator for an air bag in automobiles, a sufficient thermal stability was practically provided.

### Examples 6 to 9

The thermal stability test was conducted at 110°C using a gas generating composition (not integrally molded) comprising 40 g of the extruded pellet of the gas generating agent in Production Example 1 and 5 g of a cylindrical product of zirconia sulfate. Zirconia sulfate was placed in a gap between an SUS thick container and an aluminum container filled with the gas generating agent, and was not contacted with the gas generating agent. The results of measuring the gas concentration after the completion of the thermal stability test are shown in Table 3.

**Table 3**

| | Left-standing time (hrs) | Gas concentration (ppm) | | | | |
|---|---|---|---|---|---|---|
| | | NO | NO₂ | NH₃ | CO | CO₂ |
| Example 6 | 100 | 0 | 0 | 0 | <25 | 1000 |
| Example 7 | 200 | 0 | 0 | <1 | <50 | 1800 |
| Example 8 | 300 | 0 | 0 | <1 | <50 | 1600 |
| Example 9 | 400 | 0 | 0 | <1 | 50 | 1600 |
| Note) A value (blank value) of CO₂ in a laboratory was between 500 and 600 ppm. | | | | | | |

From the test results, it was identified that CO₂ and a small amount of CO were present in the closed container but most of NH₃ could be removed by the incorporation of zirconia sulfate.

### Example 10

After the gas concentration was measured in Examples 6 to 9, the weight loss ratio of the gas generating agent withdrawn from the closed container was examined. As a result, the weight loss ratio of the gas generating agent after 100 hours was 0.22%, the weight loss ratio of the gas generating agent after 200 hours was 0.28%, the weight loss ratio of the gas generating agent after 300 hours was 0.34%, and the weight loss ratio of the gas generating agent after 400 hours was 0.38%. It was found that in comparison with Comparative Example 5, the weight loss was markedly decreased and the incorporation of zirconia sulfate was greatly effective for improving the thermal stability. Although it was exposed to a high temperature of 110°C for a long period of time, the high thermal stability was exhibited. It was identified that when the gas generating composition of this invention was applied to a gas generator for an air bag in automobiles, a sufficient thermal stability was practically provided.

### Example 11

With respect to a gas generating composition comprising 34.5 g of the gas generating agent in Production Example 1 and 5.0 g of a spherical product of a synthetic zeolite 13X type (pore diameter approximately 10 Å), each of a composition subjected to a thermal stability test at 110°C for 400 hours as in Examples 1 to 4 and a composition not subjected thereto was placed in a gas generator for an air bag. The gas generator for an air bag was put in a 2,800-liter tank to conduct a 2,800-liter tank combustion test. By the way, in the tank combustion test, the gas generator was previously left to stand in a thermostat bath of 20°C for 2 or more hours including a time required for parts constituting the gas generator containing the composition to reach equilibrium with the adjusted temperature. In the combustion test, after actuating the gas generator by passing a current therethrough, concentrations of NO₂, NO, CO and NH₃ were measured after 3 minutes, 15 minutes and 30 minutes using a detecting tube, and average values of the gas concentrations after 3 minutes, 15 minutes and 30 minutes were defined as the concentrations of the respective gases. Consequently, in the composition not subjected to the thermal stability test, NO₂ was 0 ppm, NO 14.7 ppm, CO 133 ppm and NH₃ 20 ppm. Further, in the composition subjected to the thermal stability test, NO₂ was 0 ppm, NO 13.3 ppm, CO 143 ppm and NH₃ 17 ppm. Thus, it was identified that the gas after the combustion was quite clean and trace gases were at levels which were not harmful to human bodies.

### Example 12

With respect to a gas generating composition (not integrally molded) comprising 34.5 g of the extruded pellet of the gas generating agent in Production Example 1 and 5 g of a spherical product of a synthetic zeolite 13X type (pore diameter 10 Å), each of a total of two compositions, namely, one composition before a thermal stability test and one composition after a thermal stability test at 110°C for 400 hours, was placed in a gas generator for an air bag shown in Fig. 1. The gas generator for an air bag was put in a 60-liter tank to conduct a 60-liter tank combustion test. By the way, in the tank combustion test, the gas generator containing the composition before or after the thermal stability test was previously left to stand in a thermostat bath of 20°C for 2 or more hours including a time required for parts constituting the gas generator containing the composition to reach equilibrium with the adjusted temperature.

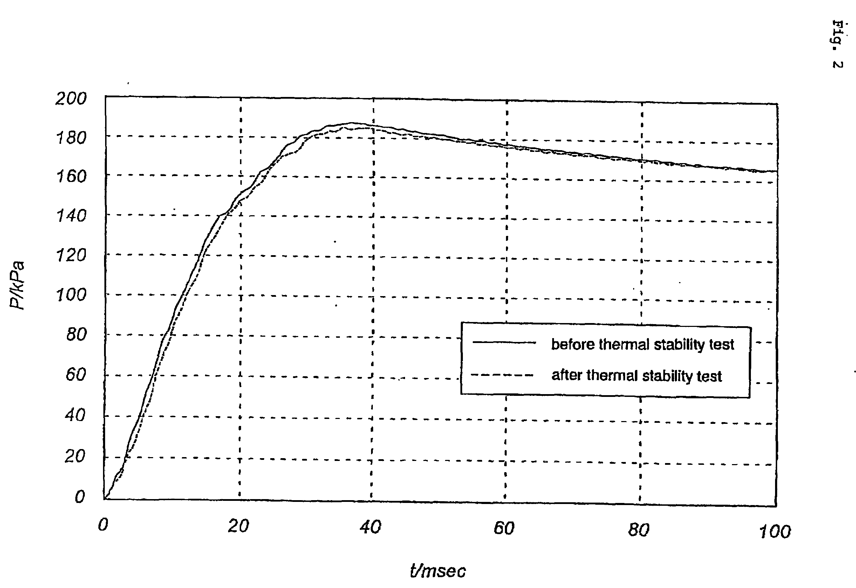

As a result of the tank combustion test, no change was observed in the combustion performance before and after the thermal stability test (the results of the combustion test are shown in Fig. 2). In Fig. 2, a solid line shows the results of the combustion test before the thermal stability test, and a broken line shows the results of the combustion test after the thermal stability test. The abscissa represents a measurement time (t/msec), and the ordinate represents an output (P/kPa) of the gas generator in the 60-liter tank. As is apparent from Fig. 2, even though the gas generating composition was left to stand in a high-temperature atmosphere of 110°C for 400 hours, the decomposition of the gas generating agent was suppressed. Accordingly, it was identified that the combustion performance was unchanged. Further, in the gas generators containing the gas generating compositions before and after the thermal stability test, the internal pressures thereof were also measured, and found to be 10,971 kPa and 10,514 kPa respectively.

### Examples 13 to 16

The thermal stability test was conducted at 110°C using a gas generating composition (not integrally molded) comprising 40 g of the extruded pellet of the gas generating agent in Production Example 2 and 2 g of a spherical product of a synthetic zeolite 13X type (pore diameter approximately 10 Å). The synthetic zeolite was placed in a gap between an SUS thick container and an aluminum container filled with the gas generating agent, and was not contacted with the gas generating agent. The results of measuring the gas concentration after the completion of the thermal stability test are shown in Table 4.

**Table 4**

| | Left-standing time (hrs) | Gas concentration (ppm) | | | | |
|---|---|---|---|---|---|---|
| | | NO | NO₂ | NH₃ | CO | CO₂ |
| Example 13 | 100 | 0 | 0 | 0 | 80 | 500 |
| Example 14 | 200 | 0 | 0 | 0 | 80 | 900 |
| Example 15 | 400 | 0 | 0 | 0 | 120 | 500 |
| Example 16 | 600 | 0 | 0 | 0 | 150 | 500 |
| Note) A value (blank value) of CO₂ in a laboratory was between 500 and 600 ppm. | | | | | | |

From the test results, it was identified that only a small amount of CO was present in the closed container and NH₃ and CO₂ could completely be removed by the incorporation of the synthetic zeolite.

### Example 17

After the gas concentration was measured in Examples 13 to 16, the weight loss ratio of the gas generating agent withdrawn from the closed container was examined. As a result, the weight loss ratio of the gas generating agent after 100 hours was 0.28%, the weight loss ratio of the gas generating agent after 200 hours was 0.36%, the weight loss ratio of the gas generating agent after 400 hours was 0.44 %, and the weight loss ratio of the gas generating agent after 600 hours was 0.52 %. It was found that the weight loss ratio was markedly decreased and the incorporation of the synthetic zeolite was greatly effective for improving the thermal stability. Although it was exposed to a high temperature of 110°C for a long period of time, the high thermal stability was exhibited. It was identified that when the gas generating composition of this invention was applied to a gas generator for an air bag in automobiles, a sufficient thermal stability was practically provided.

### Examples 18 to 21

The thermal stability test was conducted at 110°C using a gas generating composition (not integrally molded) comprising 40 g of the extruded pellet of the gas generating agent in Production Example 2 and 3 g of a spherical product of a synthetic zeolite 13X type (pore diameter approximately 10 Å). The synthetic zeolite was placed in a gap between an SUS thick container and an aluminum container filled with the gas generating agent, and was not contacted with the gas generating agent. The results of measuring the gas concentration after the completion of the thermal stability test are shown in Table 5.

**Table 5**

| | Left-standing time (hrs) | Gas concentration (ppm) | | | | |
|---|---|---|---|---|---|---|
| | | NO | NO₂ | NH₃ | CO | CO₂ |
| Example 18 | 100 | 0 | 0 | 0 | 80 | 500 |
| Example 19 | 200 | 0 | 0 | 0 | 110 | 500 |
| Example 20 | 400 | 0 | 0 | 0 | 150 | 500 |
| Example 21 | 600 | 0 | 0 | 0 | 150 | 500 |
| Note) A value (blank value) of CO₂ in a laboratory was between 500 and 600 ppm. | | | | | | |

From the test results, it was identified that only a small amount of CO was present in the closed container and NH₃ and CO₂ could completely be removed by the incorporation of the synthetic zeolite.

### Example 22

After the gas concentration was measured in Examples 18 to 21, the weight loss ratio of the gas generating agent withdrawn from the closed container was examined. As a result, the weight loss ratio of the gas generating agent after 100 hours was 0.29%, the weight loss ratio of the gas generating agent after 200 hours was 0.37%, the weight loss ratio of the gas generating agent after 400 hours was 0.42%, and the weight loss ratio of the gas generating agent after 600 hours was 0.49%. It was found that the weight loss ratio was markedly decreased and the incorporation of the synthetic zeolite was greatly effective for improving the thermal stability. Although it was exposed to a high temperature of 110°C for a long period of time, the high thermal stability was exhibited. It was identified that when the gas generating composition of this invention was applied to a gas generator for an air bag in automobiles, a sufficient thermal stability was practically provided.

## Claims

1. A gas generating composition comprising a gas generating agent containing at least one fuel selected from the group consisting of tetrazole derivatives and guanidine derivatives and a basic metal nitrate, and an adsorbent.

2. The gas generating composition according to claim 1, wherein the adsorbent is at least one selected from the group consisting of a synthetic zeolite, a natural zeolite, activated alumina, silica gel, activated carbon, clay, a solid superacid and a solid acid.

3. The gas generating composition according to claim 1 or 2, wherein the adsorbent is at least one synthetic zeolite selected from the group consisting of a 3A type (pore diameter approximately 3 Å), a 4A type (pore diameter approximately 4 Å), a 5A type (pore diameter approximately 5 Å) and a 13X type (pore diameter approximately 10 Å).

4. The gas generating composition according to any one of claims 1 to 3, wherein the gas generating agent and the adsorbent are not integrally molded.

5. The gas generating composition according to any one of claims 1 to 4, wherein a gas generating agent molded article and an adsorbent molded article are mixed.

6. The gas generating composition according to any one of claims 1 to 4, wherein the gas generating agent and the adsorbent are kept so as not to be contacted.

7. The gas generating composition according to any one of claims 1 to 6, wherein the weight loss ratio of the gas generating agent when the gas generating composition is retained in a closed state at 110°C for 400 hours is 2% or less.

8. A gas generating composition comprising a gas generating agent containing a non-sodium azide compound fuel and an oxidizing agent, and an adsorbent, the gas generating agent and the adsorbent being not integrally molded.

9. The gas generating composition according to claim 8, wherein a gas generating agent molded article and an adsorbent molded article are mixed.

10. The gas generating composition according to claim 8, wherein the gas generating agent and the adsorbent are kept so as not to be contacted.

11. The gas generating composition according to any one of claims 8 to 10, wherein the non-sodium azide compound fuel is a nitrogen-containing compound.

12. The gas generating composition according to any one of claims 8 to 11, wherein the non-sodium azide compound fuel is at least one selected from the group consisting of tetrazole derivatives and guanidine derivatives.

13. The gas generating composition according to any one of claims 8 to 12, wherein the oxidizing agent is at least one selected from the group consisting of an oxyacid salt, a metal oxide and a metal double oxide.

14. The gas generating composition according to any one of claims 8 to 12, wherein the oxidizing agent is a basic metal nitrate.

15. The gas generating composition according to any one of claims 8 to 14, wherein the adsorbent is at least one synthetic zeolite selected from the group consisting of a 3A type (pore diameter approximately 3 Å), a 4A type (pore diameter approximately 4 Å), a 5A type (pore diameter approximately 5 Å) and a 13X type (pore diameter approximately 10 Å).

16. The gas generating composition according to any one of claims 8 to 15, wherein the weight loss ratio of the gas generating agent when the gas generating composition is retained in a closed state at 110°C for 400 hours is 2% or less.

17. A gas generating composition comprising a gas generating agent containing a non-sodium azide compound fuel and an oxidizing agent and meeting at least one of the following requirements (a) to (c):
(a) a weight loss ratio of the gas generating agent when the gas generating composition is retained in a closed state at 110°C for 400 hours is 2% or less,
(b) regarding concentrations of trace gases contained in a gas generated by the combustion of the gas generating agent, as values measured in a 2, 800-liter tank, CO is 400 ppm or less, NO is 40 ppm or less, NO₂ is 8 ppm or less and NH₃ is 100 ppm or less, and
(c) a maximum internal pressure in a gas generator in the combustion of the gas generating agent is between 7,840 and 17,640 kPa.

18. The gas generating composition according to claim 17, wherein the non-sodium azide compound fuel is a nitrogen-containing compound.

19. The gas generating composition according to claim 17 or 18, wherein the non-sodium azide compound fuel is at least one selected from the group consisting of tetrazole derivatives and guanidine derivatives.

20. The gas generating composition according to any one of claims 17 to 19, wherein the oxidizing agent is at least one selected from the group consisting of an oxyacid salt, a metal oxide and a metal double oxide.

21. The gas generating composition according to any one of claims 17 to 20, wherein the oxidizing agent is a basic metal nitrate.

22. The gas generating composition according to any one of claims 17 to 21, which further comprises an adsorbent.

23. The gas generating composition according to claim 22, wherein the adsorbent is at least one synthetic zeolite selected from the group consisting of a 3A type (pore diameter approximately 3 Å), a 4A type (pore diameter approximately 4 Å), a 5A type (pore diameter approximately 5 Å) and a 13X type (pore diameter approximately 10 Å).

24. The gas generating composition according to claim 22 or 23, wherein the gas generating agent and the adsorbent are not integrally molded.

25. The gas generating composition according to any one of claims 22 to 24, wherein a gas generating agent molded article and an adsorbent molded article are mixed.

26. The gas generating composition according to any one of claims 22 to 24, wherein the gas generating agent and the adsorbent are kept so as not to be contacted.

27. A gas generator using the gas generating composition according to any one of claims 1 to 26.

28. An inflator system using the gas generator according to claim 27.
